# EUROPEAN PATENT APPLICATION

(11) **EP 4 617 527 A1**
(43) Date of publication of application: **17.09.2025**
(21) Application number: 23909140.8
(22) Date of filing: 24.07.2023
(51) Int. Cl.: F16H 57/029

(54) **GEARBOX AND WIND TURBINE GENERATOR SET**

(30) Priority: 27.12.2022 CN 202211707351
(71) Applicant: GOLDWIND SCIENCE & TECHNOLOGY CO., LTD., Xinjiang 830026 (CN)
(72) Inventor: LI, Yanhui, Beijing 100176 (CN); HE, Haitao, Beijing 100176 (CN); WANG, Wentao, Beijing 100176 (CN)
(74) Representative: Hoffmann Eitle
(86) International application number: PCT/CN2023/108956
(87) International publication number: WO 2024/139197

(57) **Abstract**

A gearbox and a wind turbine are provided. The gearbox includes: a first end cover, which is ring-shaped and includes a first body and a first ring portion located on a side of the first body; a second end cover, which is disposed on a side of the first end cover and is rotatable relative to the first end cover, wherein the second end cover is ring-shaped and includes a second body and a second ring portion located on a side of the second body, the second ring portion and the first ring portion are located between the first body and the second body, and the second ring portion and the first ring portion are nested with and spaced apart from each other; and a sealing component, which is between the first ring portion and the second ring portion to abut against the first ring portion and the second ring portion and is spaced apart from the first body in a first direction, wherein the first end cover further includes a first oil discharge hole; the first body, the sealing component, the first ring portion, and the second ring portion enclose and form a first chamber, and the first chamber is in communication with the first oil discharge hole. The sealing effect of the gearbox can be effectively improved.

## Description

### CROSS-REFERENCE TO RELATED APPLICATIONS

The present application claims priority to Chinese Patent Application No. 202211707351.7, entitled "GEARBOX AND WIND TURBINE", filed on December 27, 2022, which is incorporated herein by reference in its entirety.

### TECHNICAL FIELD

The present application relates to the technological field of wind power devices, and particularly, to, a gearbox and a wind turbine.

### BACKGROUND

With the continuous development of wind power generation technology, users have increasingly high requirements for wind turbines. The wind turbines have the characteristics of long service life, complex structure, etc.

A wind turbine includes blades, a low-speed shaft system, a gearbox, and a high-speed shaft system. The kinetic energy of the blades can be transmitted to the low-speed shaft system, and the gearbox converts the low-speed rotation in the low-speed shaft system into high-speed rotation, which is then transmitted to the high-speed shaft system. Therefore, the gearbox is very important for the normal operation of the wind turbine.

During the operation of gearboxes, lubricating grease in most of the gearboxes leaks due to various reasons after their high-speed end operates for a period of time, causing pollution to their generator and unit.

### SUMMARY

Embodiments of the present application provide a gearbox and a wind turbine to improve the sealing effect of the gearbox.

Embodiments in a first aspect of the present application provide a gearbox, including: a first end cover, which is ring-shaped and includes a first body and a first ring portion located on a side of the first body; a second end cover, which is disposed on a side of the first end cover and is rotatable relative to the first end cover, where the second end cover is ring-shaped and includes a second body and a second ring portion located on a side of the second body, the second ring portion and the first ring portion are located between the first body and the second body, and the second ring portion and the first ring portion are nested with and spaced apart from each other; and a sealing component, which is between the first ring portion and the second ring portion to abut against the first ring portion and the second ring portion and is spaced apart from the first body in a first direction, where the first end cover further includes a first oil discharge hole; the first body, the sealing component, the first ring portion, and the second ring portion enclose and form a first chamber, and the first chamber is in communication with the first oil discharge hole.

An embodiment in a second aspect of the present application further provides a wind turbine, including the gearbox in the above embodiment.

In the gearbox provided in the embodiments of the present application, the gearbox includes the first end cover, the second end cover, and the sealing component disposed in the first end cover and the second end cover. The first end cover includes the first body and the first ring portion, and the second end cover includes the second body and the second ring portion. The first ring portion, the second ring portion, the first body, and the second body enclose and form an internal space of the gearbox. During the use of the gearbox, lubricating grease may flow out from the internal space via a gap between the first ring portion and the second ring portion. The sealing component is added in the embodiments of the present application, and the sealing component is between the first ring portion and the second ring portion to abut against the first ring portion and the second ring portion to form the first chamber, such that the sealing component can block grease leaked from the surfaces of the first ring portion and the second ring portion and hold the grease in the first chamber. The first chamber is in communication with the first oil discharge hole, such that the leaked grease can be discharged via the first oil discharge hole, thereby eliminating grease pollution caused by the leakage of grease in other positions and effectively improving the sealing effect of the gearbox.

### BRIEF DESCRIPTION OF THE DRAWINGS

Other features, objectives, and advantages of the present application will become more apparent by reading the following detailed descriptions of non-restrictive embodiments with reference to the accompanying drawings, where the same or similar reference numerals indicate the same or similar features.
Fig. 1 is a schematic structural view of a gearbox provided in an embodiment of the present application;
Fig. 2 is a schematic view of an exploded structure of Fig. 1;
Fig. 3 is a cross-sectional view of Fig. 1;
Fig. 4 is a schematic view of a partial enlarged structure of Fig. 1;
Fig. 5 is a schematic view of a partial enlarged structure of Fig. 4;
Fig. 6 is a schematic view of a partial enlarged structure of Fig. 2; and
Fig. 7 is a schematic structural view of a connecting component of a gearbox provided in an embodiment of the present application.

### Reference signs:

100: First end cover; 110: First body; 120: First ring portion; 121: Fourth connecting hole; 130:First oil discharge hole; 131: Opening portion; 132:Extension portion; 140: First sealing ring portion;
200: Second end cover; 210: Second body; 220: Second ring portion; 221: Oil cutting groove; 230: Second sealing ring portion;
300: Sealing component; 310:Flexible oil absorption portion; 320: Oil baffle; 321: Opening;
400: Crimping component; 410: Third body; 420: Limit protrusion;
500: Connecting component; 510: Limit portion; 511: Positioning plane; 520: First connecting segment; 530: Second connecting segment;
600: Third end cover; 610: Second oil discharge hole; 620: Oil collection chamber;
700: Transport pipe;
Q0: Internal space; Q1: First chamber; Q2: Second chamber; X: First direction; Y: Radial direction.

### DETAILED DESCRIPTION

The features and exemplary embodiments of various aspects of the present application will be described in detail below. In the following detailed description, many specific details are provided in order to provide a comprehensive understanding of the present application.

In the description of the present application, it should be noted that, unless otherwise specified, "a plurality of" means two or more; the orientations or positional relationships indicated by the terms "upper", "lower", "left", "right", "inner", "outer", etc. are only for facilitating description of the present application and simplifying the description, but do not indicate or imply that the pointed apparatuses or elements must have specific orientations or be constructed and operated in specific orientations. Therefore, the terms should not be understood to limit the present application. Furthermore, the terms "first" and "second" are only for the sake of description and cannot be understood as indicating or implying the relative importance.

The orientation terms appearing in the following description all indicate directions shown in the drawings, and are not intended to limit the specific structures of the embodiments of the present application. In the description of the present application, it should also be noted that, unless otherwise clearly specified and defined, the terms "mounted" and "connected" should be generally understood, for example, the "connected" may be fixedly connected, detachably connected, integrally connected, directly connected, or indirectly connected. Those of ordinary skill in the art can understand the specific meanings of the above terms in the present application according to specific circumstances.

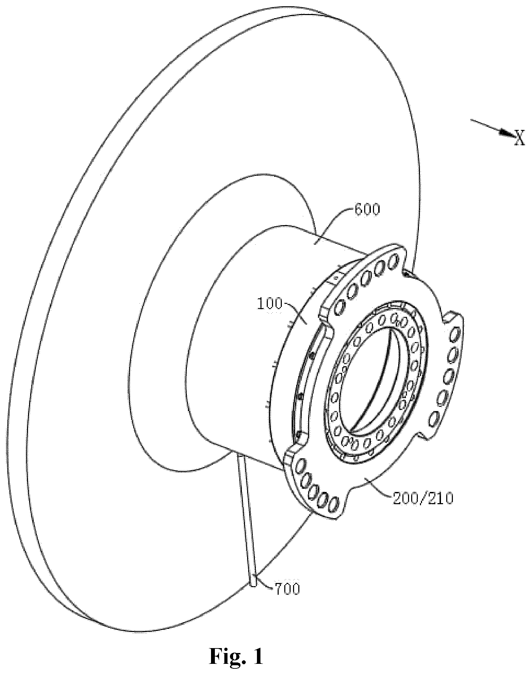

In order to better understand the present application, a gearbox and a wind turbine in the embodiments of the present application will be described in detail below in conjunction with Fig. 1 to Fig. 7.

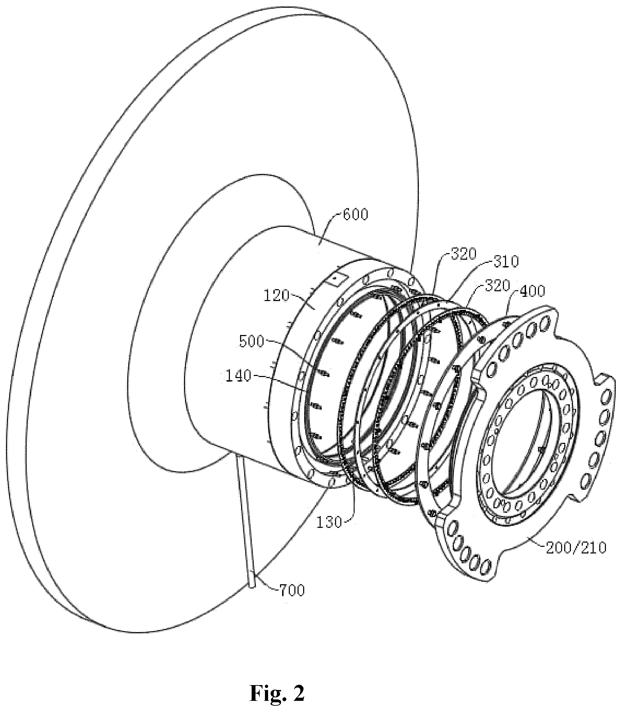

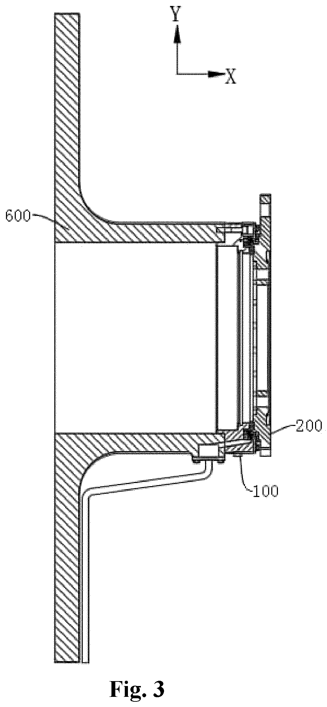

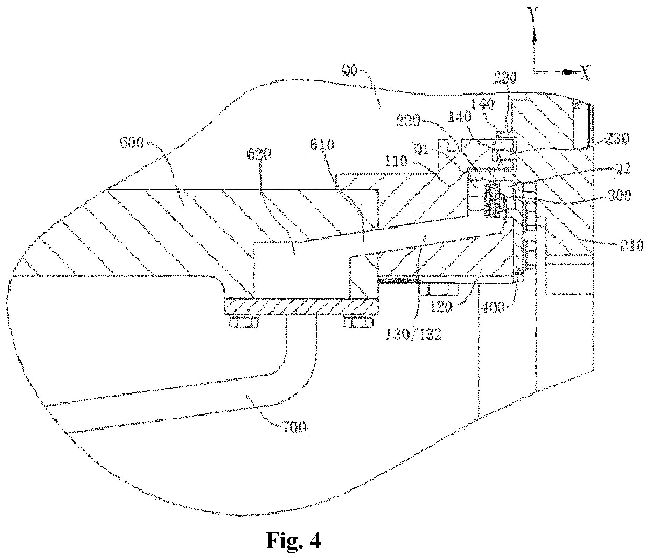

Refer to Fig. 1 to Fig. 4 together. Fig. 1 is a schematic structural view of a gearbox provided in an embodiment of the present application; Fig. 2 is a schematic view of an exploded structure of Fig. 1; Fig. 3 is a partial cross-sectional view of Fig. 1; Fig. 4 is a schematic view of a partial enlarged structure of Fig. 3.

As shown in Fig. 1 to Fig. 4, embodiments in a first aspect of the present application provide a gearbox. The gearbox includes a first end cover 100, a second end cover 200, and a sealing component 300. The first end cover 100 is ring-shaped and includes a first body 110 and a first ring portion 120 located on a side of the first body 110; the second end cover 200 is disposed on a side of the first end cover 100 and is rotatable relative to the first end cover 100, the second end cover 200 is ring-shaped and includes a second body 210 and a second ring portion 220 located on a side of the second body 210, the second ring portion 220 and the first ring portion 120 are located between the first body 110 and the second body 210, and the second ring portion 220 and the first ring portion 120 are nested with and spaced apart from each other; the sealing component 300 is between the first ring portion 120 and the second ring portion 220 to abut against the first ring portion 120 and the second ring portion 220 and is spaced apart from the first body 110 in a first direction X, where the first end cover 100 further includes a first oil discharge hole 130; the first body 110, the sealing component 300, the first ring portion 120, and the second ring portion 220 enclose and form a first chamber Q1, and the first chamber Q1 is in communication with the first oil discharge hole 130.

In the gearbox provided in the embodiments of the present application, the gearbox includes the first end cover 100, the second end cover 200, and the sealing component 300 disposed in the first end cover 100 and the second end cover 200. The first end cover 100 includes the first body 110 and the first ring portion 120, and the second end cover 200 includes the second body 210 and the second ring portion 220. The first ring portion 120, the second ring portion 220, the first body 110, and the second body 210 enclose and form an internal space Q0 of the gearbox. During the use of the gearbox, lubricating grease may flow out from the internal space Q0 via a gap between the first ring portion 120 and the second ring portion 220. The sealing component 300 is added in the embodiments of the present application, and the sealing component 300 is between the first ring portion 120 and the second ring portion 220 to abut against the first ring portion 120 and the second ring portion 220 to form the first chamber Q1, such that the sealing component 300 can block grease leaked from the surfaces of the first ring portion 120 and the second ring portion 220 and hold the grease in the first chamber Q1. The first chamber Q1 is in communication with the first oil discharge hole 130, such that the leaked grease can be discharged via the first oil discharge hole 130, thereby eliminating grease pollution caused by the leakage of grease in other positions and effectively improving the sealing effect of the gearbox.

In the first end cover 100 and the second end cover 200, the second end cover 200 is rotatably disposed, and the first oil discharge hole 130 is disposed at the first end cover 100. The first oil discharge hole 130 is disposed at the stationary end cover, which can eliminate the shaking of leaked lubricating grease in the first oil discharge hole 130, such that the lubricating grease can be better discharged from the first oil discharge hole 130.

Optionally, the first end cover 100 may be a bearing end cover, the second end cover 200 may be a high-speed shaft end cover of the gearbox, and the high-speed shaft end cover is connected to a rotor of a generator in a wind turbine. Optionally, the gearbox further includes a third end cover 600, which is connected to a side of the first end cover 100 away from the second end cover 200. Optionally, the third end cover 600 may be a rear end cover of the gearbox, and the rear end cover of the gearbox is connected to the high-speed shaft end cover by the bearing end cover.

Optionally, the first end cover 100 and the second end cover 200 are disposed sequentially in the first direction X.

In some optional embodiments, as shown in Fig. 1 to Fig. 4, the gearbox further includes a crimping component 400 which is connected to a side of the first ring portion 120 facing the second body 210 and is spaced apart from the sealing component 300; the crimping component 400, the first ring portion 120, the second ring portion 220, and the sealing component 300 enclose and form a second chamber Q2, and the second chamber Q2 is in communication with the first oil discharge hole 130.

In these optional embodiments, the crimping component 400 is disposed between the second body 210 and the first ring portion 120, and the crimping component 400 is spaced apart from the sealing component 300, such that the sealing component 300, the crimping component 400, the first ring portion 120, and the second ring portion 220 can enclose and form the second chamber Q2. When the lubricating grease flows from the first chamber Q1 via the sealing component 300 and the first ring portion 120 or the second ring portion 220 into the second chamber Q2, the crimping component 400 can further block the lubricating grease. The second chamber Q2 is in communication with the first oil discharge hole 130, such that the lubricating grease in the second chamber Q2 can also be discharged from the first oil discharge hole 130. This embodiment can further improve the sealing performance of the gearbox by adding the crimping component 400.

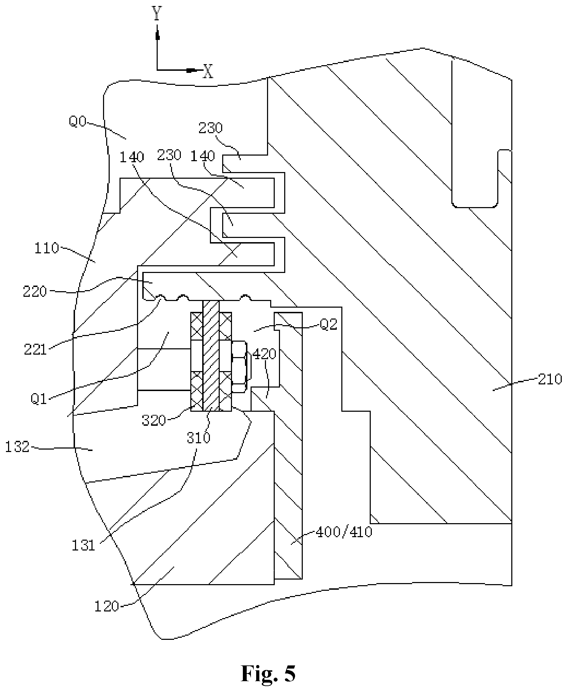

Optionally, as shown in Fig. 5, the crimping component 400 is spaced apart from the second ring portion 220 to prevent friction damage to the crimping component 400 when the second ring portion 220 rotates with the second body 210 relative to the first end cover 100.

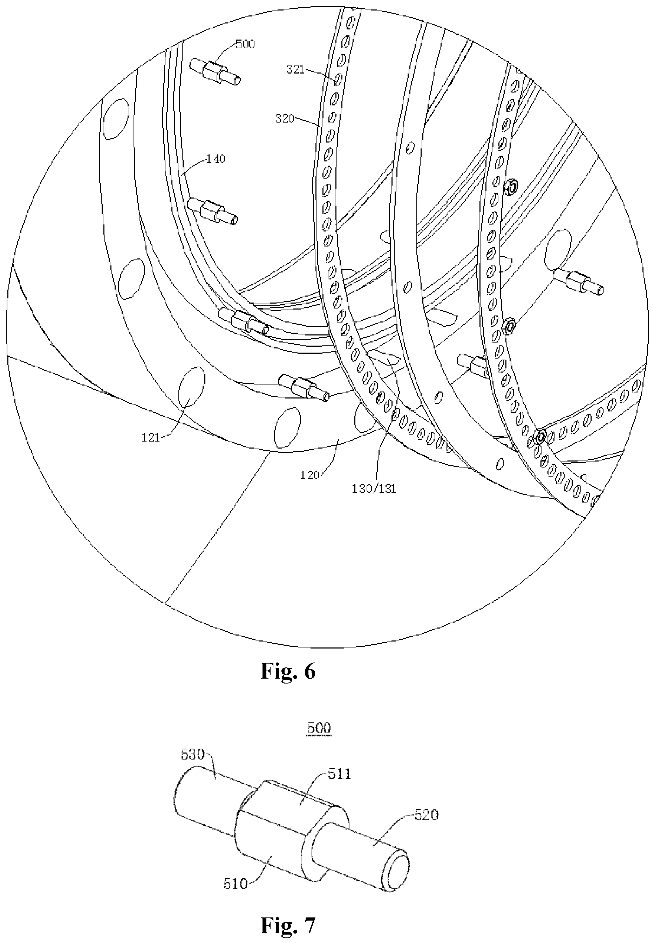

Optionally, as shown in Fig. 2, the crimping component 400 is in the shape of a ring plate and connected to the first ring portion 120. For example, the crimping component 400 is provided with a through third connecting hole (not shown), the first ring portion 120 is provided with a fourth connecting hole 121 (see Fig. 6) corresponding to a first connecting hole, and a connector passes through the third connecting hole and the fourth connecting hole 121 to connect the crimping component 400 and the first ring portion 120.

In some optional embodiments, as shown in Fig. 4 and Fig. 5, the crimping component 400 includes a third body 410 and a limit protrusion 420 disposed on the third body 410 and facing the first ring portion 120, the third body 410 abuts against a surface of the first ring portion 120 away from the first body 110, and the limit protrusion 420 is ring-shaped and limited to a side of the first ring portion 120 facing the second chamber Q2.

In these optional embodiments, the third body 410 abuts against the surface of the first ring portion 120 to provide a limit in the first direction X to the crimping component 400, and the cooperation between the limit protrusion 420 and the first ring portion 120 can provide a circumferential limit to the crimping component 400. Therefore, the third body 410 and the limit protrusion 420 can improve the stability of relative positions of the crimping component 400 and the first ring portion 120.

Optionally, one portion of the third body 410 abuts against a surface of the first ring portion 120, and the other portion of the third body 410 is spaced apart from the sealing component 300 to form the second chamber Q2.

In some optional embodiments, as shown in Fig. 4 to Fig. 6, the first oil discharge hole 130 includes an opening portion 131 and an extension portion 132, the opening portion 131 is formed by a depression of an inner surface of the first ring portion 120 facing the first chamber Q1 and the second chamber Q2, and the extension portion 132 is disposed on the first body 110 and is in communication with the opening portion 131.

In these optional embodiments, the opening portion 131 of the first oil discharge hole 130 is formed by the depression of the inner surface of the first ring portion 120 facing the first chamber Q1 and the second chamber Q2, such that the first oil discharge hole 130 can be in communication with both the first chamber Q1 and the second chamber Q2 through the opening portion 131. The extension portion 132 extends inside the first body 110 and is in communication with the opening portion 131, such that leaked lubricating grease can flow into the extension portion 132 from the opening portion 131.

Optionally, there may be a plurality of first oil discharge holes 130 which are spaced apart along the circumference of the first ring portion 120. For example, as shown in Fig. 6, the quantity of the first oil discharge hole 130 may be three, and the three first oil discharge holes 130 are disposed near the bottom of the first ring portion 120. Further, there may be a plurality of opening portions 131 which are spaced apart along the circumference of the first ring portion 120. Optionally, in a usage state of the gearbox, the first oil discharge holes 130 are disposed at the bottom of the first end cover 100, such that leaked lubricating grease can enter the first oil discharge holes 130 under the action of gravity.

Optionally, the sealing component 300 is spaced apart from an inner wall surface of the opening portion 131, such that the leaked lubricating grease can flow from the second chamber Q2 into the first chamber Q1 and continue to flow into the extension portion 132.

In some optional embodiments, as shown in Fig. 4 and Fig. 5, a surface of the second ring portion 220 facing the first chamber Q1 and/or a surface of the second ring portion 220 facing the second chamber Q2 is depressed to form an oil cutting groove 221.

In these optional embodiments, by forming the oil cutting groove 221 on the second ring portion 220, on the one hand, the length of a flow path for the leaked lubricating grease can be increased, and the leakage speed of the lubricating grease can be reduced; on the other hand, the surface of the oil cutting groove 221 is depressed relative to the second ring portion 220, making it easier for the leaked lubricating grease to accumulate and drip here. Therefore, the oil cutting groove 221 can further improve the sealing effect of the gearbox.

In addition, the oil cutting groove 221 is formed on the second ring portion 220. When the second end cover 200 rotates relative to the first end cover 100, the lubricating grease on the second ring portion 220 can be thrown into the oil cutting groove 221 with the rotation of the second end cover 200, making it easier for the leaked lubricating grease to accumulate and drip here.

Optionally, there may be a plurality of oil cutting grooves 221 that are spaced apart in the first direction X. The plurality of oil cutting grooves 221 can further increase the length of the flow path for the leaked lubricating grease, reduce the leakage speed of the lubricating grease, and improve the sealing effect of the gearbox.

In some optional embodiments, as shown in Fig. 4 and Fig. 5, the side of the first body 110 facing the first ring portion 120 is further provided with at least one first sealing ring portion 140, and the first sealing ring portion 140 is sleeved on a side of the second ring portion 220 away from the first ring portion 120.

In these optional embodiments, by adding at least one first sealing ring portion 140, a labyrinth seal can be formed between the first sealing ring portion 140 and the second ring portion 220, which can increase the length of the flow path for the leaked lubricating grease, reduce the leakage speed of the lubricating grease, and improve the sealing effect of the gearbox.

In some optional embodiments, as shown in Fig. 4 and Fig. 5, the side of the second body 210 facing the second ring portion 220 is further provided with at least one second sealing ring portion 230, the second sealing ring portion 230 is sleeved on a side of the second ring portion 220 away from the first ring portion 120 and is spaced apart from the second ring portion 220, and the at least one first sealing ring portion 140 is located between the second sealing ring portion 230 and the second ring portion 220.

In these optional embodiments, the second body 210 is also provided with the second sealing ring portion 230, and a multi-layer labyrinth seal can be formed by the cooperation of the first ring portion 120, the second ring portion 220, the first sealing ring portion 140, and the second sealing ring portion 230, thereby further increasing the length of the flow path for the leaked lubricating grease, reducing the leakage speed of the lubricating grease, and improving the sealing effect of the gearbox.

The quantity of the first sealing ring portion 140 is various; for example, there is one first sealing ring portion 140 or a plurality of first sealing ring portions 140 which are nested with each other, and a labyrinth groove may be formed between two adjacent sealing ring portions, such that the second sealing ring portion 230 is located between the two adjacent first sealing ring portions 140.

Also the quantity of the second sealing ring portion 230 is various; for example, there is one second sealing ring portion 230 or a plurality of second sealing ring portions 230 which are nested with each other, and a labyrinth groove may be formed between two adjacent sealing ring portions, such that the first sealing ring portion 140 is located between the two adjacent second sealing ring portions 230.

As shown in Fig. 4 and Fig. 5, the embodiments of the present application are illustrated with two first sealing ring portions 140 and two second sealing ring portions 230. In other embodiments, the quantities of the first sealing ring portion 140 and the second sealing ring portion 230 may be 3, 4, etc.

The sealing component 300 is disposed in various ways, as long as the sealing component 300 can be between the first ring portion 120 and the second ring portion 220 to abut against the first ring portion 120 and the second ring portion 220.

For example, as shown in Fig. 4 and Fig. 5, the sealing component 300 includes a flexible oil absorption portion 310, and the flexible oil absorption portion 310 abuts against the first ring portion 120 and the second ring portion 220 each. When the lubricating grease leaks and flows along the first ring portion 120 and the second ring portion 220, the flexible oil absorption portion 310 abutting against the first ring portion 120 and the second ring portion 220 can adsorb the leaked lubricating grease, such that the lubricating grease accumulates and is discharged via the first oil discharge hole 130. The flexible oil absorption portion 310 includes, for example, a felt.

In some optional embodiments, an extension distance H1 of the flexible oil absorption portion 310 in a radial direction Y of the first end cover 100 and a spacing distance H2 between the first ring portion 120 and the second ring portion 220 have a difference of 1 mm to 2 mm, and H1>H2. The size of the flexible oil absorption portion 310 in a radial direction Y is greater than the spacing between the first ring portion 120 and the second ring portion 220, such that the flexible oil absorption portion 310 can be in interference fit with the first ring portion 120 and the second ring portion 220, which ensures the stability of abutment of the flexible oil absorption portion 310 against the first ring portion 120 and the second ring portion 220. The first end cover 100 has a plurality of radial directions Y, as shown in Fig. 4 and Fig. 5. The present application is illustrated by one of the radial directions Y.

In some optional embodiments, an extension thickness of the flexible oil absorption portion 310 in the first direction X is 3 mm to 10 mm. The thickness of the flexible oil absorption portion 310 within the above range can improve the effect of adsorbing the grease by the excessively thin flexible oil absorption portion 310, and can also prevent the formation of the first chamber Q1 or the second chamber Q2 from being affected by the over-sized sealing component caused by the excessively thick flexible oil absorption portion 310.

In some optional embodiments, as shown in Fig. 2 to Fig. 5, the sealing component 300 further includes an oil baffle 320 located on the side of the flexible oil absorption portion 310 facing the first body 110 or the second body 210, and the oil baffle 320 is spaced apart from the second ring portion 220.

Optionally, the oil baffle 320 may be integrally formed, or the oil baffle 320 is formed by splicing a plurality of sub plates.

In these optional embodiments, by providing the oil baffle 320, on the one hand, the oil baffle 320 can provide support for the flexible oil absorption portion 310, to avoid loose abutment against the first ring portion 120 and the second ring portion 220 due to the deformation of the flexible oil absorption portion 310; on the other hand, when gaseous grease leaks and encounters the oil baffle 320, the oil baffle 320 enables the gaseous grease to accumulate and form liquid grease, thereby solving the problem of leakage of the gaseous grease and further improving the sealing effect of the gearbox.

Optionally, as shown in Fig. 2 to Fig. 5, there are two oil baffles 320, and the two oil baffles 320 are disposed on two sides of the flexible oil absorption portion 310, that is, the flexible oil absorption portion 310 is provided with oil baffles 320 facing the first body 110 and the second body 210. The two oil baffles 320 can provide better support for the flexible oil absorption portion 310 and further improve the sealing effect of the gearbox.

Optionally, the extension size of the oil baffle 320 in the radial direction Y is slightly less than the size of the flexible oil absorption portion 310. For example, the extension size H3 of the oil baffle 320 in the radial direction Y and the extension size H1 of the flexible oil absorption portion 310 in the radial direction Y have a difference of 1 mm to 2 mm, which solves the problem that the oil baffle 320 affects the abutment of the flexible oil absorption portion 310 against the first ring portion 120 and the second ring portion 220. Optionally, the extension size of the oil baffle 320 in the radial direction Y is slightly less than the spacing between the first ring portion 120 and the second ring portion 220 in the radial direction Y. For example, the extension size H3 of the oil baffle 320 in the radial direction Y and the spacing distance H2 between the first ring portion 120 and the second ring portion 220 have a difference of 1 mm to 2 mm, which facilitates the installation of the oil baffle 320 between the first ring portion 120 and the second ring portion 220.

In some optional embodiments, as shown in Fig. 2 to Fig. 5, the oil baffle 320 includes a plurality of openings 321 penetrating in the first direction X. Therefore, the leaked gaseous or liquid lubricating grease can be adsorbed by the flexible oil absorption portion 310 via the openings 321, thereby improving the adsorption effect of the flexible oil absorption portion 310.

In some optional embodiments, as shown in Fig. 2 to Fig. 5, the gearbox further includes a connecting component 500 that connects the sealing component 300 and the first body 110, the connecting component 500 is provided with a limit portion 510, and the limit portion 510 is between the sealing component 300 and the first body 110 to abut against the sealing component 300 and the first body 110, such that the sealing component 300 is spaced apart from the first body 110 in the first direction X.

In these optional embodiments, the sealing component 300 can be connected to the first body 110 by the connecting component 500. The limit portion 510 added to the connecting component 500 abuts against the sealing component 300 and the first body 110, and the limit portion 510 can provide a limit to the sealing component 300, thereby ensuring the stability of relative positions of the sealing component 300 and the first body 110, and further ensuring the stability of the size of the first chamber Q1.

Optionally, when the sealing component 300 includes the flexible oil absorption portion 310 and the oil baffle 320, the connecting component 500 can pass through the flexible oil absorption portion 310 and the oil baffle 320 and connect the two to the first body 110. The limit portion 510 can be between the oil baffle 320 and the first body 110 to abut against the oil baffle 320 and the first body 110.

The connecting component 500 is disposed in various ways, for example, two ends of the connecting component 500 are welded or bonded to the first body 110 and the oil baffle 320.

In other embodiments, as shown in Fig. 2 to Fig. 7, the first body 110 is provided with a first connecting hole (not shown), the connecting component 500 includes a first connecting segment 520 facing the first body 110, and the first connecting segment 520 is connected to the first connecting hole; the sealing component 300 is provided with a second connecting hole (not shown), the connecting component 500 includes a second connecting segment 530 facing the sealing component 300, and the second connecting segment 530 is connected to the second connecting hole, where the sizes of the first connecting segment 520 and the second connecting segment 530 in the radial direction Y are both less than the size of the limit portion 510 in the radial direction Y.

Optionally, when the sealing component 300 includes the oil baffle 320 and the flexible oil absorption portion 310, a second connecting hole is provided on each of the oil baffle 320 and the flexible oil absorption portion 310, and the second connecting segment 530 is connected to the second connecting holes on the oil baffle 320 and the flexible oil absorption portion 310.

In these optional embodiments, the first connecting segment 520 and the second connecting segment 530 at the two ends of the connecting component 500 are connected to the sealing component 300 and the first body 110 respectively. Because the sizes of the first connecting segment 520 and the second connecting segment 530 are both less than the size of the limit portion 510 in the radial direction Y, that is, the size of the limit portion 510 along the radial direction Y is greater than the sizes of the first connecting segment 520 and the second connecting segment 530, the first body 110 and the sealing component 300 can be blocked at the two ends of the limit portion 510.

Optionally, as shown in Fig. 7, the first connecting segment 520 and the second connecting segment 530 may be cylindrical. Optionally, external threads are provided on the first connecting segment 520 and the second connecting segment 530, and internal threads are provided in the first connecting hole and the second connecting hole, such that the connecting component 500 can be tightly connected to the first body 110 and the sealing component 300 by the threads.

In some optional embodiments, as shown in Fig. 7, the limit portion 510 is provided with a positioning plane 511 perpendicular to the radial direction Y of the connecting component 500. The positioning plane 511 facilitates clamping the connecting component 500 with a tool for mounting and fastening the connecting component 500.

In some optional embodiments, as shown in Fig. 1 to Fig. 5, the gearbox further includes a third end cover 600 connected to the side of the first end cover 100 away from the second end cover 200, the third end cover 600 is provided with a second oil discharge hole 610 and an oil collection chamber 620 that are in communication with each other, and the second oil discharge hole 610 is in communication with the first oil discharge hole 130. Therefore, the leaked lubricating grease can flow into the oil collection chamber 620 via the first chamber Q1, the first oil discharge hole 130, and the second oil discharge hole 610. Optionally, the capacity of the oil collection chamber 620 is greater than or equal to 50000 cubic millimeters.

In some optional embodiments, an angle between an extension path of the first oil discharge hole 130 or the second oil discharge hole 610 and a central axis of the first end cover 100 is 5° to 8°. In these optional embodiments, when the angle between the extension path of the first oil discharge hole 130 or the second oil discharge hole 610 and the central axis of the first end cover 100 is 5° to 8°, the angle between the extension path of the first oil discharge hole 130 or the second oil discharge hole 610 and the central axis of the first end cover 100 is greater than or equal to an elevation angle of a unit, thereby solving the problems of accumulation, bubbles, and back flow in the oil discharge process.

In some optional embodiments, as shown in Fig. 1 to Fig. 5, the gearbox further includes an oil inlet hole and a transport pipe 700, and the transport pipe 700 connects the first oil discharge hole 130 and the oil inlet hole. As such, the leaked lubricating grease can enter the oil inlet hole via the first oil discharge hole 130 and the transport pipe 700 for reuse, which can improve the utilization of the lubricating grease.

In the embodiments of the present application, oil mist generated after being blocked internally at a height end of the gearbox or a small amount of lubricating grease reaches the internal space Q0 enclosed by the first ring portion 120, the second ring portion 220, the first body 110, and the second body 210, and then reaches the second ring portion 220 via the labyrinth seal formed by the first sealing ring portion 140 and the second sealing ring portion 230. Some of the grease can be thrown into the first chamber Q1 or the second chamber Q2 via the oil cutting groove 221 on the second ring portion 220, and then discharged via the first oil discharge hole 130. The grease that is not thrown by the oil cutting groove 221 is adsorbed by the flexible oil absorption portion 310 of the sealing component 300 when passing through the sealing component 300, then enters the first chamber Q1 or the second chamber Q2, and is discharged via the first oil discharge hole 130. In addition, the oil mist in the first chamber Q1 or the second chamber Q2, blocked and collected by the oil baffle 320 and the flexible oil absorption portion 310, can also be converted into liquid grease, which then enters the first chamber Q1 or the second chamber Q2 and is discharged via the first oil discharge hole 130. In the embodiments of the present application, the sealing component 300 can effectively improve the sealing performance of the gearbox and alleviate the pollution caused by leaked grease to a generator, a unit, etc. inside the wind turbine.

An embodiment in a second aspect of the present application further provides a wind turbine, including the gearbox in any of the above embodiments. The wind turbine in the embodiment of the present application, including the aforementioned gearbox, has the beneficial effects of the gearbox, which will not be repeated here.

Although the present application is described with reference to the preferred embodiments, various improvements can be made and equivalents can be substituted for components therein without departing from the scope of the present application. In particular, as long as there is no structural conflict, various technical features mentioned in the embodiments can be combined in any way. The present application is not limited to the specific embodiments disclosed herein, but includes all technical solutions falling within the scope of the claims.

## Claims

1. A gearbox, comprising:
a first end cover, which is ring-shaped and comprises a first body and a first ring portion located on a side of the first body;
a second end cover, which is disposed on a side of the first end cover and is rotatable relative to the first end cover, wherein the second end cover is ring-shaped and comprises a second body and a second ring portion located on a side of the second body, the second ring portion and the first ring portion are located between the first body and the second body, and the second ring portion and the first ring portion are nested with and spaced apart from each other; and
a sealing component, which is between the first ring portion and the second ring portion to abut against the first ring portion and the second ring portion and is spaced apart from the first body in a first direction,
wherein the first end cover further comprises a first oil discharge hole; the first body, the sealing component, the first ring portion, and the second ring portion enclose and form a first chamber, and the first chamber is in communication with the first oil discharge hole.

2. The gearbox according to claim 1, further comprising a crimping component that is connected to a side of the first ring portion facing the second body and is spaced apart from the sealing component, wherein the crimping component, the first ring portion, the second ring portion, and the sealing component enclose and form a second chamber, and the second chamber is in communication with the first oil discharge hole.

3. The gearbox according to claim 2, wherein the first oil discharge hole comprises an opening portion and an extension portion, the opening portion is formed by a depression of an inner surface of the first ring portion facing the first chamber and the second chamber, and the extension portion is disposed on the first body and is in communication with the opening portion.

4. The gearbox according to claim 2, wherein the crimping component comprises a third body and a limit protrusion disposed on the third body and facing the first ring portion, the third body abuts against a surface of the first ring portion away from the first body, and the limit protrusion is ring-shaped and limited to a side of the first ring portion facing the second chamber.

5. The gearbox according to claim 2, wherein a surface of the second ring portion facing the first chamber and/or a surface of the second ring portion facing the second chamber is depressed to form an oil cutting groove.

6. The gearbox according to claim 5, wherein a plurality of oil cutting grooves are spaced apart in the first direction.

7. The gearbox according to claim 1, wherein the first end cover comprises a plurality of the first oil discharge holes spaced apart along the circumference of the first end cover.

8. The gearbox according to claim 1, wherein the side of the first body facing the first ring portion is further provided with at least one first sealing ring portion, and the first sealing ring portion is sleeved on a side of the second ring portion away from the first ring portion.

9. The gearbox according to claim 8, wherein the side of the second body facing the second ring portion is further provided with at least one second sealing ring portion, the second sealing ring portion is sleeved on a side of the second ring portion away from the first ring portion and is spaced apart from the second ring portion, and the at least one first sealing ring portion is located between the second sealing ring portion and the second ring portion.

10. The gearbox according to claim 1, wherein the sealing component comprises a flexible oil absorption portion, and the flexible oil absorption portion abuts against the first ring portion and the second ring portion each.

11. The gearbox according to claim 10, wherein an extension distance H1 of the flexible oil absorption portion in a radial direction of the first end cover and a spacing distance H2 between the first ring portion and the second ring portion have a difference of 1 mm to 2 mm, and H1>H2.

12. The gearbox according to claim 10, wherein an extension thickness of the flexible oil absorption portion in the first direction is 3 mm to 10 mm.

13. The gearbox according to claim 10, wherein the sealing component further comprises an oil baffle located on a side of the flexible oil absorption portion facing the first body or the second body, and the oil baffle is spaced apart from the second ring portion.

14. The gearbox according to claim 13, wherein the oil baffle comprises a plurality of openings penetrating in the first direction.

15. The gearbox according to claim 1, further comprising a connecting component that connects the sealing component and the first body, wherein the connecting component is provided with a limit portion, and the limit portion is between the sealing component and the first body to abut against the sealing component and the first body, such that the sealing component is spaced apart from the first body in the first direction.

16. The gearbox according to claim 15, wherein
the first body is provided with a first connecting hole, the connecting component comprises a first connecting segment facing the first body, and the first connecting segment is connected to the first connecting hole,
the sealing component is provided with a second connecting hole, the connecting component comprises a second connecting segment facing the sealing component, and the second connecting segment is connected to the second connecting hole,
sizes of the first connecting segment and the second connecting segment in the radial direction are both less than a size of the limit portion in the radial direction.

17. The gearbox according to claim 16, wherein the limit portion is provided with a positioning plane perpendicular to the radial direction of the connecting component.

18. The gearbox according to claim 1, further comprising a third end cover connected to a side of the first end cover away from the second end cover, wherein the third end cover is provided with a second oil discharge hole and an oil collection chamber that are in communication with each other, and the second oil discharge hole is in communication with the first oil discharge hole.

19. The gearbox according to claim 18, wherein an angle between an extension path of the first oil discharge hole or the second oil discharge hole and a central axis of the first end cover is 5° to 8°.

20. The gearbox according to claim 1, wherein the gearbox further comprises an oil inlet hole and a transport pipe, and the transport pipe connects the first oil discharge hole and the oil inlet hole.

21. A wind turbine, comprising the gearbox according to any one of claims 1-20.
